# EUROPEAN PATENT APPLICATION

(11) **EP 2 747 471 A1**
(43) Date of publication of application: **25.06.2014**
(21) Application number: 12306659.9
(22) Date of filing: 21.12.2012
(51) Int. Cl.: H04W 12/10, G06Q 20/32, G06Q 20/40

(54) **Method for certifying a displayed picture**

(71) Applicant: Gemalto SA, 92190 Meudon (FR)
(72) Inventor: Ohayon, Franck, 13705 La Ciotat (FR); Brun, Alain, 13705 La Ciotat (FR); Hugot, Didier, 13705 La Ciotat (FR)

(57) **Abstract**

The present invention relates to a method for certifying a displayed picture, using:
- a user device (UD) Near Field Communication compatible, comprising a secure element (USE),
- a control device (CD) Near Field Communication compatible,

said method comprising the steps of:
- opening a Near Field Communication channel between the user device (UD) and the controller device (CD),
- transmitting an information from the secure element (USE) to the control device (CD) via said Near Field Communication channel,
- displaying an element determined from said information, on the control device (CD).

## Description

### FIELD OF THE INVENTION

The present invention relates to picture certification, and more particularly to a method for certifying a picture displayed on a screen thanks to Near Field Communication exchanges.

### BACKGROUND

Nowadays, mobile devices are multifunction. They can notably be used as dematerialized cards by replacing some plastic cards (simple printed cards, contact or contactless cards).

On a classic printed card, one certification element is the picture printed on said card. This picture can be checked by a control agent to authenticate the owner of the card. Indeed, printed information, such as pictures, are difficult to modify.

On the contrary, an electronic device such as a smartphone or a tactile tablet is an un-trusted environment: it is easier to modify displayed information. Indeed, the picture is simply displayed on the device but there is no guarantee that the picture is trusted.

### SUMMARY

It is an object of the invention to provide a method for certifying a picture displayed on a mobile device screen such as a handset or a tactile tablet.

To this end, the invention provides a method for certifying a displayed picture, using:
- a user device Near Field Communication compatible, comprising a Secure element,
- a control device Near Field Communication compatible,
said method comprising the steps of:
- opening a Near Field Communication channel between the user device and the control device,
- transmitting an information from the secure element to the control device via said Near Field Communication channel,
- displaying an element determined from said information, on the control device.

Near Field Communication (NFC) is a short-range wireless technology that enables the communication between devices over a distance of less than 10 cm.

A NFC channel between two devices is opened by getting close these devices for trigging the NFC communication. This operation is commonly called a "tap".

Some NFC applications, for example those that involve financial transactions, require a "secure element" within a NFC device to securely store applications and/or credentials (for example financial account numbers) and provide for secure execution of applications.

The secure element is a dynamic environment in which application code and application data can be securely stored and administered, and in which secure execution of applications occur. It provides delimited memory for each application and other functions that can encrypt, decrypt, and sign the data.

A secure element can be implemented either by a separate secure smart card chip, in the SIM/UICC, or in a SD card that can be inserted in the mobile phone. It can also be embedded into the device.

In the invention, the element displayed on the control device is determined from information coming from the secure element. Thus, said element is trusted. Said element is either:
- the picture to certify itself, or
- an encryption key for decrypting the picture to certify, or
- a watermark (for example a One-Time Password), the same watermark being displayed onto the picture to certify, said picture being displayed on the user device.
In all cases, the picture is trusted.

By watermark, it is heard any unpredictable, recognizable and unique element, information, or figure that can be printed in the picture to guarantee that it is the original picture.

In a not limited embodiment, the information is a picture stored in the secure element, and the element is the information. Thus, the picture displayed on the control device is trusted because coming from the secure element.

In another not limited embodiment:
- the element is a picture,
- said picture is stored encrypted in a memory space of the user device,
- the information is an encryption key used for encryption of the picture in the memory space, and
the method comprises the steps of:
- triggering a communication protocol between the user device and the control device,
- transmitting said picture via said large band communication protocol.
- decrypting said encrypted picture by means of the encryption key.

Indeed, the memory space of the secure element can be not large enough for storing a picture. Thus, the encrypted picture is transmitted by a large band communication, and decrypted by means of information coming from the secure element. As a consequence, the picture is trusted.

Advantageously, the communication protocol is Bluetooth, WIFI or NFC. Indeed, the Bluetooth, WIFI or NFC allow fast transmissions of sizeable data and any other protocol dedicated to data transmission.

In another not limited embodiment, the information is a watermark, the element is the information, and the method comprises a step of generating said watermark by the secure element. A watermark is a marker applied onto pictures for certifying them. The watermark is applied on the picture to certify, which is displayed on the user device. The watermark is also displayed on the control device. Thus, by comparing the watermarks displayed on the two devices, one can detect if the picture has been modified.

Advantageously, the watermark is a One-Time Password or an unpredictable graphic particularity, such as a pattern or a sign. These are classical watermarks.

In a first possibility, the method comprises applying the watermark on a picture stored in the secure element, then displaying said watermarked picture on the user device. In this case, the picture displayed on the user device is trusted, because coming from the secure element through the access control application.

In a second possibility, the method comprises displaying on the user device a picture stored in a memory space of the user device, via an access control application having access rights to the security element, then applying the watermark on said picture.

To improve the security, a Trusted Execution Environment (TEE) running on the user device secures the memory space wherein the image is stored. Indeed, this possibility is particularly interesting in case the memory space of the secure element can be not large enough for storing a picture. However, as the access control application has access rights to the Security Element, the picture once the watermark is applied can not be modified, so the picture displayed on the user device is trusted.

### BRIEF DESCRIPTION OF THE DRAWINGS

Some embodiments of apparatus and/or methods in accordance with embodiments of the present invention are now described, by way of example only, and with reference to the accompanying drawings, in which:
- figure 1 shows two devices involved in a method according to the invention;
- figure 2 shows a first embodiment of a method according to the invention;
- figure 3 shows a second embodiment of a method according to the invention;
- figure 4 shows a third embodiment of a method according to the invention;
- figure 5 shows a fourth embodiment of a method according to the invention.

### DESCRIPTION OF EMBODIMENTS

In the following description, well-known functions or constructions by the man skilled in the art are not described in detail since they would obscure the invention in unnecessary detail.

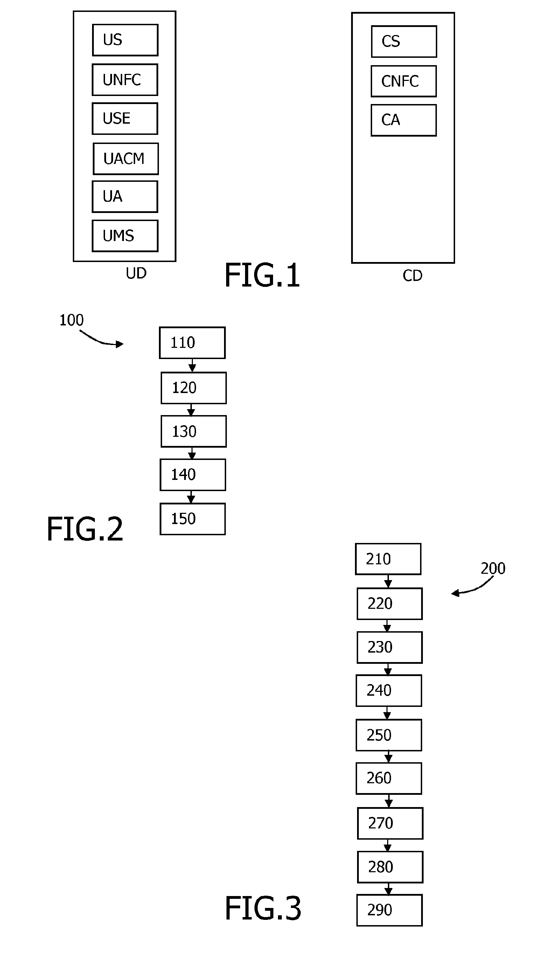

The object of the invention provides a method for certifying a picture displayed on a Near Field Communication (NFC) device. In the following description, a non limited use case is detailed, wherein the picture to certify is a picture of a student. As illustrated on figure 1, the method entails:
- a user device UD, carried by said student, comprising:
   ○ a user screen US;
   ○ a first NFC chip UNFC;
   ○ a secure element USE, which is for example a Subscriber Identity module (SIM) card, a micro secure digital (SD) card, or a secure element USE embedded in the user device UD;
   ○ an access control module UACM, which is a module managing access rights between user device applications and the secure element USE;
   ○ an application called user application UA in the following description, allowed to access the secure element USE by the access control module UACM, and adapted for displaying items on the user screen US;
   ○ a memory space UMS;
- a control device CD, carried by a control agent, comprising:
   ○ a control screen CS;
   ○ a second NFC chip CNFC;
   ○ an application called control application CA in the following description, allowed to access the secure element USE by the access control module UACM via a NFC channel, and adapted for displaying items on the control screen CS.

The user device UD and the control device CD are mobile devices, for example smart phones or tactile tablets.

Some embodiments of the method are described hereafter.

### First embodiment

In this not limited embodiment, the picture is stored in the secure element USE. Since the secure element USE is secured, the picture can not be modified by the end user, for example a student having his student card checked.

The steps of a method 100 according to the first embodiment are schematically illustrated by figure 2. Said method 100 comprises:
- Step 110: launching the control application CA by the control device CD.
- Step 120: opening a Near Field Communication channel between the user device UD and the control device CD.
- Step 130: sending a request for the picture by the control application CA to the secure element USE, via the NFC channel.
- Step 140: transmitting the picture by the secure element USE to the control device CD, via said NFC channel.
- Step 150: displaying said picture by the control application CA on the control screen CS.

The picture displayed on the control screen CS is trusted because it comes from the secure element USE.

### Second embodiment

In this not limited embodiment, the picture is stored in the memory space UMS of the user device UD. It allows storing images of large sizes. The picture is encrypted, for example by means of a Data Encryption Standard (DES) algorithm or a Triple DES algorithm. These algorithms use at least an encryption key, necessary for decrypting the picture. This key is stored in the secure element USE.

The steps of a method 200 according to the second embodiment are schematically illustrated by figure 3. Said method 200 comprises:
- Step 210: launching the control application CA by the control device CD.
- Step 220: opening a Near Field Communication channel between the user device UD and the control device CD.
- Step 230: sending a request for the picture by the control application CA to the secure element USE, via the NFC channel.
- Step 240: transmitting the encryption key by the secure element USE to the control device CD, via said NFC channel.
- Step 250: triggering a communication protocol between the user device UD and the control device CD. This communication protocol is for example a Bluetooth protocol, a WIFI protocol, or another NFC protocol.
- Step 260: closing the NFC channel. It should be noted that this step is optional.
- Step 270: transmitting the encrypted picture from the memory space UMS by the user device UD to the control device CD, via said communication protocol.
- Step 280: decrypting said encrypted picture by the control application CA, by means of the encryption key.
- Step 290: displaying the decrypted picture by the control application CA on the control screen CS.

The picture displayed on the control screen CS is trusted because the encryption key necessary for decrypting said picture comes from the secure element USE.

In another embodiment, the encryption key is not stored in the secure element USE but in the user device UD. In this case, the step 240 is not realized.

In still another embodiment, the encryption key is not stored in the secure element SE but known by the control device CD. This encryption key is advantageously stored in a secure element in the control device. In this case, the step 240 is also not realized.

### Third embodiment

In this not limited embodiment, the picture is stored in the secure element USE. Since the secure element USE is secured, the picture can not be modified by the student.

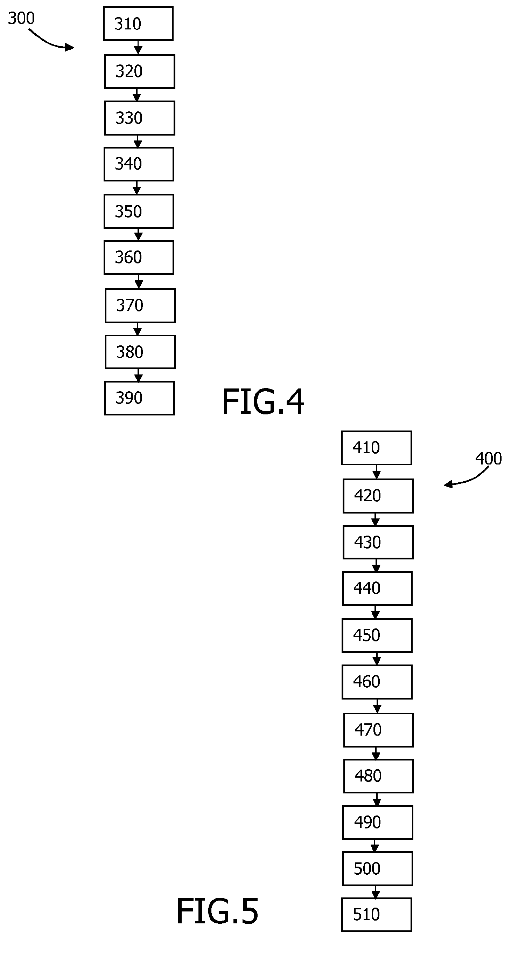

The steps of a method 300 according to the third embodiment are schematically illustrated by figure 4. Said method 300 comprises:
- Step 310: launching the control application CA by the control device CD.
- Step 320: opening a Near Field Communication channel between the user device UD and the control device CD.
- Step 330: launching the user application UA by the user device UD. The launching can be triggered manually by the user or automatically by the tap/NFC event between the two devices.
- Step 340: generating a watermark by the secure element USE. A watermark is, for example, a one-time password or a graphic particularity intended to be added to the picture. A watermark is any unique, recognizable and unpredictable sign.
- Step 350: watermarking the picture with the watermark by the secure element USE.
- Step 360: displaying the watermarked picture on the user screen US by the user application UA.
- Step 370: sending a request for said watermark by the control application CA to the secure element USE, via the NFC channel.
- Step 380: transmitting the watermark by the secure element USE to the control device CD, via the NFC channel.
- Step 390: displaying said watermark by the control application CA on the control screen CS.

The picture displayed on the user screen US is trusted because the watermark and the picture come from the secure element USE. By comparing the watermark applied on the photo and displayed on the user device UD, and the watermark displayed on the control screen CS, the control agent determines if the picture has been modified. Indeed, if the picture has not been modified, then the watermarks are similar.

In another embodiment, the watermark is not generated by the secure element USE: the watermark is generated by the control application CA. In this case, instead of step 340, the method comprises a step of generating the watermark by the control application CA, then a step of transmitting said watermark to the secure element USE. Naturally, steps 370 and 380 are not realized.

It should be noted that steps 310, 320 and 330 can be inverted: the launchings of the user application UA and the control application CA are either realized manually or automatically upon opening of the NFC channel.

Besides, steps 370, 380 and 390 can be realized between steps 340 and 350.

### Fourth embodiment

In this not limited embodiment, the picture is stored in the memory space UMS of the control device CD. This memory space UMS is reachable by the user application UA. It allows storing images of large sizes.

The steps of a method 400 according to the fourth embodiment are schematically illustrated by figure 5. Said method 400 comprises:
- Step 410: launching the control application CA by the control device CD.
- Step 420: opening a Near Field Communication channel between the user device UD and the control device CD.
- Step 430: launching the user application UA by the user device UD, upon opening of the NFC channel.
- Step 440: generating a watermark by the secure element USE.
- Step 450: accessing the watermark by the user application UA. Indeed, the user application UA has access rights to the secure element USE, as determined by the access control module UACM.
- Step 460: accessing the picture from the space memory by the user application UA.
- Step 470: watermarking the picture with said watermark by the user application UA.
- Step 480: displaying the watermarked picture by the user application UA on the user screen US.
- Step 490: sending a request for said watermark by the control application CA to the secure element USE, via the NFC channel.
- Step 500: transmitting the watermark by the secure element USE to the control device CD, via the NFC channel.
- Step 510: displaying said watermark by the control application CA on the control screen CS.

The picture displayed on the user screen US is trusted because the watermark has been computed by the secure element USE. By comparing the watermark applied on the photo and displayed on the user device UD, and the watermark displayed on the control screen CS, the control agent determines if the picture has been modified. Indeed, if the picture has not been modified, then the watermarks are similar.

In another embodiment, the watermark is not generated by the secure element USE: the watermark is generated by the control application CA. In this case, instead of step 440, the method comprises a step of generating the watermark by the control application CA, then a step of transmitting said watermark to the secure element USE. Naturally, steps 490 and 500 are not realized.

It should be noted that steps 410, 420 and 430 can be inverted: the launchings of the user application UA and the control application CA are either realized manually or automatically upon opening of the NFC channel.

Besides, steps 490, 500 and 510 can be realized between steps 440 and 450.

The NFC standard defines two types of NFC device. These are known as the initiator and target of the communication. As the names imply, the initiator is the device that initiates the communication and controls the data exchanges. The target device is the one that responds to the requests from the Initiator.

In the embodiments described hereabove, the control device CD is the initiator and the user device UD is the target. However, the reverse situation is possible.

Besides, the NFC standard defines three communication modes:
- Card Reader: This mode of operation within NFC allows applications to read or write data in a contactless card or in another NFC device running in card emulation mode.
- Card emulation: This mode enables the NFC device to behave as a standard contactless Smartcard.
- Peer to peer: A third mode within NFC is the peer to peer mode which supports device to device link-level communication.

In the described embodiments, the control device CD is in the reader mode, and the user device UD is in the card emulation mode. However, the reverse situation is possible. Moreover, the user device UD and the control device CD could use the peer to peer mode.

## Claims

1. A method for certifying a displayed picture, using:
- a user device (UD) Near Field Communication compatible, comprising a secure element (USE),
- a control device (CD) Near Field Communication compatible, said method comprising the steps of:
- opening a Near Field Communication channel between the user device (UD) and the controller device (CD),
- transmitting an information from the secure element (USE) to the control device (CD) via said Near Field Communication channel,
- displaying an element determined from said information, on the control device (CD).

2. A method according to claim 1, wherein:
- the information is a picture, stored in the secure element (USE),
- the element is the information.

3. A method according to claim 1, wherein:
- the element is a picture,
- said picture is stored encrypted in a memory space (UMS) of the user device (UD),
- the information is an encryption key used for encryption of the picture in the memory space (UMS), and
the method comprises the steps of:
- triggering a communication protocol between the user device (UD) and the control device (CD),
- transmitting the encrypted picture via said communication protocol,
- decrypting said encrypted picture by means of an encryption key.

4. A method according to claim 3, wherein the information is the encryption key.

5. A method according to claim 3, wherein the encryption key is stored in the control device (CD).

6. A method according any of claims 3 to 5, wherein the communication protocol is a Bluetooth protocol, a WIFI protocol or a NFC protocol.

7. A method according to claim 1, wherein:
- the information is a watermark,
- the element is the information,
and the method comprises a step of generating said watermark by the secure element (USE).

8. A method according to claim 1, wherein the method comprises:
- a step of generating said watermark by the control device (CD).
- a step of transmitting said watermark by the control device (CD) to the user device (UD).

9. A method according to claim 7 or claim 8, wherein the watermark is a One-Time Password or an unpredictable graphic particularity.

10. A method according to any of claims 7 to 9, comprising the steps of:
- applying the watermark on a picture stored in the secure element (USE),
- displaying said watermarked picture on the user device (UD).

11. A method according to any of claims 7 to 9, comprising the steps of :
- displaying on the user device (UD) a picture stored in a memory space (UMS) of the user device (UD), via an access control application (CA) having rights to access the Security Element,
- applying the watermark on said picture.

12. A method according to any of the previous claims, wherein the secure element (USE) is a SIM card, a micro SD card, a Trusted Execution Environment, or is embedded in the user device (UD).
